# EUROPÄISCHE PATENTSCHRIFT

(11) **EP 2 541 160 B1**
(45) Veröffentlichungstag und Bekanntmachung des Hinweises auf die Patenterteilung: **13.04.2016**
(21) Anmeldenummer: 12170704.6
(22) Anmeldetag: 04.06.2012
(51) Int. Cl.: F24J 2/04, F24J 2/34, F24J 2/50, F24D 17/00

(54) **Anordnung zur Ausnützung der einstrahlenden Sonnenenergie an Gebäuden**
Assembly for exploiting the solar energy irradiated on buildings
Agencement destiné à l'utilisation de l'énergie solaire rayonnante sur des bâtiments

(30) Priorität: 03.06.2011 AT 32311 U
(43) Veröffentlichungstag der Anmeldung: 02.01.2013
(73) Patentinhaber: Aschauer, Bernhard, 4362 Bad Kreuzen (AT); Aschauer, Johann, 4362 Bad Kreuzen (AT)
(72) Erfinder: Aschauer, Bernhard, 4362 Bad Kreuzen (AT); Aschauer, Johann, 4362 Bad Kreuzen (AT)
(74) Vertreter: Patentanwaltskanzlei Hübscher

(56) Entgegenhaltungen:
- DE-A1- 19 756 634
- DE-A1- 19 800 777
- US-A- 4 432 346

## Beschreibung

Die Erfindung betrifft eine Anordnung zur Ausnützung der einstrahlenden Sonnenenergie an Gebäuden, insbesondere zwei oder mehrgeschossigen Wohnblöcken, mit einem Gebäude einem an dem Gebäude angebrachten Kollektor, mit durch ein für die Strahlung wenigstens teildurchlässigem Material abgedeckten, isolierten Aufnahmeräumen für Wärmespeicher, der ein über Leitungen in das Gebäude zu führendes Medium, insbesondere Wasser oder Luft aufheizt, und wenigstens einen weiteren Speicherkörper zur Wärmeabgabe an das in das Gebäude zu führende Medium umfasst.

Ein bekannter mit einer Glasabdeckplatte ausgestatteter Sonnenkollektor weist ein erstes und ein zweites Wandelement auf, wobei die beiden Wandelemente mit Abstand zueinander angeordnet sind, zueinander im Wesentlichen parallel verlaufen, durch Querwände miteinander verbunden sind und die Wände mindestens einen Hohlkörper bilden. In den Hohlkörper ist mindestens ein plattenförmiges Bauteil eingebracht, das aus im Wesentlichen parallel verlaufenden Wandelementen besteht, die durch Querwände miteinander verbunden sind, wobei die Wandelemente einen zweiten Hohlkörper bilden, der zahlreiche nebeneinander angeordnete bzw. dicht angrenzende Kammern oder Kanäle aufweist, die zur Aufnahme eines gasförmigen oder flüssigen Mediums dienen und wobei die Kammern oder Kanäle untereinander kommunizieren. Im Falle der Solarnutzung zur Warmwassergenerierung kann ein vereisen des Wassers im Kollektor mit einer derartigen Vorrichtung nicht vermieden werden. Zudem ist die Verwendung eines Pufferspeichers vorgesehen, womit keine unmittelbare Nutzung der gesammelten Energie an Verbrauchsstellen möglich ist.

Bei anderen bekannten Kollektoren ist zum Beispiel hinter einer großflächigen Verglasung eines Gebäudes eine Solaranlage mit von Wasser oder Luft durchströmten Leitungen angeordnet. Es können auch mehrere solcher Anlagen zusammengeschaltet werden und das erhitzte Medium einem Pufferbehälter zugeführt werden, aus dem Brauchwasser gegebenenfalls über einen Wärmetauscher entnommen werden kann. Eine derartige Anlage mit Glasabdeckung ist aus der DE 197 56 634 A1 bekannt. Derartige Anlagen zur Warmwasserbereitung bzw. Vorwärmung und in Sonderfällen, insbesondere mit Zusatzheizung und einer Umwälzpumpe für das im Kollektor erhitzte und über einen Wärmetauscher den Heizungskreislauf beaufschlagende Wasser, können auch zur wenigstens teilweisen Beschickung von Zentralheizungsanlagen verwendet werden.

Nachteilig bei allen diesen Ausführungen sind die vorhandenen relativ großen Leitungswege zwischen den Kollektoren, dem Speicher und zusätzlich zwischen dem Speicher und den Verbraucherstellen. Es ergeben sich dadurch nicht nur große Leitungslängen, sondern auch beträchtliche Wärmeverluste. In der Praxis handelt es sich bei der Anbringung der Solaranlagen hinter Glaswänden um Sonderausführungen und es werden vielfach unmittelbar der Sonnenenergie ausgesetzte Anlagen ohne Glasabdeckung verwendet. Ein Beispiel dafür entnimmt man der DE 42 40 252 A1, bei welchem der Kollektorkörper aus verbundenen Keramikplatten, die die Wasserführungswege umschließen, gebildet ist. Kollektoren zur direkten Lufterwärmung für den Anschluss an Warmluftheizungen sind ferner aus der CH 593 452 bekannt. Gerade die im modernen Bürobau üblichen durchgehenden Glaswände führen anderseits zu beträchtlichen Erhitzungsproblemen, ohne dass mit Ausnahme des oben genannten Falles eine tatsächlich brauchbare, wirtschaftliche Nutzung der Sonnenenergie erfolgt.

Aufgabe der Erfindung ist die Schaffung einer Anlage der eingangs genannten Art, die vielseitig eingesetzt werden kann und die es insbesondere für die Warmwasserbereitung zu Warmwasserentnahmestellen oder Warmwasserheizungen sowie bei der Lufterwärmung es ermöglichen soll, lange Leitungsführungen und aufwendige Steuereinrichtungen zu vermeiden sowie eine unmittelbare Nutzung der gesammelten Energie an den Verbrauchsstellen oder an bzw. in Gebäuden zu ermöglichen, wobei ein hoher Wirkungsgrad erzielt wird und auch bei einfachen, nur zur Wanderwärmung des Gebäudes dienenden Speichern Überhitzungen vermieden und eine Anpassung an die jeweilige Bestrahlungsseite erzielt werden kann.

Die gestellte Aufgabe wird bei einer Anlage der eingangs genannten Art prinzipiell dadurch gelöst, dass das für die Strahlung durchlässige Material thermische U-Werte von unter 0,9 W/m² K, insbesondere von unter 0,7 W/m² K, aufweist und dass die Leitungen für erwärmtes Wasser oder erwärmte Luft den Kollektor unmittelbar mit wenigstens einem, in einem hinter dem Kollektor und in dem Gebäude liegenden Verbraucherraum angeordneten, Verbraucher verbunden sind, wobei der zugeordnete Kollektor in seiner Wärmespeicherkapazität und Temperatur für den zu erwartenden Verbrauch an Wärmeenergie ausgelegt und im Falle der Warmwasserbereitung mit einer Verbrauchswasserleitung verbunden ist, womit die Warmwasserentnahme unter dem Zuleitungsdruck der Verbrauchswasserleitung erfolgt. Die erwähnten thermischen U-Werte des für die Strahlung durchlässigen Materials sollten so gering wie möglich sein. Ebenso empfiehlt es sich wenn die Anordnung weitere Speicher zur Aufnahme und Abgabe von Wärme umfasst, welche Wärme in der Anordnung gefangen und nach und nach durch eine zugeordnete Gebäudewandung in das Gebäude abgegeben werden kann.

In vielen Fällen lässt sich bei der gewählten Konstruktion, insbesondere im Falle der Warmwasserzufuhr, die sonst notwendige Verwendung von Sammelbehältern und Förderpumpen vermeiden. Durch die erwähnte Bemessungsregel soll erreicht werden, dass unzulässige Übertemperaturen für den jeweiligen Anwendungsfall vermieden werden.

Ein wesentlicher Vorteil ergibt sich, wenn in Weiterbildung der Erfindung ein für die Warmwasserzufuhr zu einem Bad bestimmter Kollektor an die Außenwand des jeweiligen Bades anschließend angebracht ist. In Sonderfällen kann man für extreme Witterungsverhältnisse den Kollektor mit einem Überhitzungsschutz ausstatten.

Besonders für die direkte Entnahme des erwärmten Wassers kann man zusätzlich als Verbrühungsschutz an der Warmwasserentnahmestelle einer Dusche, eines Waschbeckens oder eines Bades im Kollektor eine selbsttätig einschaltende Kaltwasserzufuhrleitung und bzw. oder eine Umwälzpumpe für das Speicherwasser vorgesehen.

Eine besonders günstige Ausnützung der erzeugten Wärme ergibt sich, wenn in Weiterbildung der Erfindung das Verbrauchswasser vor dem Kollektor über eine, vorzugsweise am zugeordneten Warmwasserablauf der Entnahmestelle oder Entnahmestellen oder an einem Sammelbehälter für das ablaufende Wasser vorgesehenen Wärmetauscher geführt ist. Dabei ist z. B. beim Betrieb einer Dusche ein besonders hoher Wirkungsgrad erzielbar, da das von der Dusche ablaufende, warme Wasser bei der erstgenannten Möglichkeit unmittelbar das dem Kollektor zugeführt Wasser aufheizt. Für Anlagen ohne direkten Ablauf bzw. einem wie im Falle einer Badewanne erst nach der Benützung geöffneten Ablauf empfiehlt sich dagegen die Variante mit einem Sammelbehälter durch den die Verbrauchswasserzufuhr über einen Wärmetauscher erfolgen kann, wobei auch die Möglichkeit besteht, über einen in der Sammelstelle angebrachten Wärmetauscher einen Vorratsbehälter mit dort für die Wasserleitung erwärmtem Wasser vorzusehen.

Weitere Regelmöglichkeiten ergeben sich dadurch, dass die Kapazität der verschiedenen Kollektoren für Warmwasser, Luft oder direkte Raumerwärmung durch angepasste bzw. Anzahl der transparenten Folienschichten zusätzlich bestimmt ist.

Wie schon erwähnt wurde, kann durch Anzahl, Dicke und Form sowie Strahlungsdurchlässigkeit der übereinanderliegenden Folien eine Anpassung an die jeweils zulässige bzw. erwünschte maximale Aufheizung der Wärmespeicher erzielt werden. Hier ergibt sich eine besonders günstige Anordnung, wenn die übereinanderliegenden Folien des für die Strahlung durchlässigen Materials eine aus parallelen Wellen oder zick-zack-Profilen gebildete Profilierung aufweisen und aufeinanderfolgende Folien mit einander kreuzenden Wellen- oder Zackenprofilen verlegt sind, wobei die Strahlungsausnutzung und die Dämmeigenschaften durch die Anzahl der Folien bestimmbar ist. Dabei haben die aufeinandergelegten Folien nur punktweise Berührungsstellen mit der benachbarten Folie. Selbstverständlich können weitere Anpassungen durch Auswahl des Folienmaterials oder allfällige Beschichtungen dieser Folien erzielt werden. Im Normalfall werden Folien von einer Dicke unter 1 mm, beispielsweise 0,5 mm, verwendet, wobei die Außenfolie, sofern sie Witterungseinflüssen ausgesetzt ist, dicker als die der anderen Folien sein kann bzw. durch die schon erwähnten Außengläser ersetzt ist.

Zur zusätzlichen Nutzung der an den Gebäudeaußenseiten vorhandenen Flächen, können der oder die einer Wohnung zugeordneten Kollektoren durch weitere Solaranlagen, insbesondere durch z. B. im Dachbereich angeordnete Photovoltaikelemente zur zusätzlichen Versorgung mit elektrischer Energie ergänzt werden.

Die erfindungsgemäße Anordnung erfordert keine zusätzlichen besonderen technischen Hilfsmittel wie Pumpen, Regelungen, Frostschutz od. dgl. und vermag es dennoch die gemäß der Aufgabe gestellten Anforderungen erfüllt: Im Fall der Solarnutzung zur Warmwassergenerierung ist unbedingt ein vereisen des Wassers im Kollektor zu verhindern. Dies ist mit der Erfindung dadurch gelöst, dass die transparente Wärmedämmung vor dem Absorber/Speicher-System mindestens U-Werte kleiner 0,7 W/m².K aufweist. Unterstützt wird dieses System dabei gegebenenfalls durch in der Anordnung vorgesehene Speicher zur Aufnahme und Abgabe von Wärme. Diese transparente Wärmedämmung nach vorne zur Sonnenseite ist beispielsweise eine Einheit aus Isolierglas, ggf. mit Luftspalt und/oder umfasst gegebenenfalls dem Glas zugeordnete transparente Folienschichten oder sonstigen transparente, wärmedämmende Füllungen. Diese Folienschichten/Füllungen können dabei im Luftzwischenraum zw. Absorber und Isolierglas liegen oder auch zwischen den Glasscheiben selbst bzw. innerhalb des Isolierglases oder sogar die Begrenzungen selbst herstellen. Bei guter Qualität der Gläser kann auf die Verwendung der Wärmedämmenden Folien auch verzichtet werden. Mit der Erfindung kann somit ein Vorwärmen eines Fluids und ein passives Heizen eines dahinter liegenden Raumes in einer Vorrichtung umgesetzt werden. Eine weitere Verbesserung der U-Werte auf unter 0,3 W/m²K kann durch den Einsatz verbesserter Isoliergläser, Beschichtungstechnologien erreicht werden.

Weitere Einzeleinheiten und Vorteile dieser Erfindung entnimmt man aus der nachfolgenden Zeichnungsbeschreibung. In der Zeichnung ist der Erfindungsgegenstand beispielsweise dargestellt. Es zeigen
- Fig. 1: in teilweise schematisierter Darstellungsweise einen erfindungsgemäßen Kollektor im Längsschnitt,
- Fig. 2: einen Schnitt nach der Linie II-II der Fig. 1,
- Fig. 3: in stark vergrößerter und zur besseren Darstellung des Erfindungsgedankens überhöhter Darstellungsweise ein Teilstück eines in einem Halterungsrahmen befestigten Foliensatzes und
- Fig. 4: ein Schema einer erfindungsgemäßen für den Betrieb einer Dusche vorgesehenen Anlage im Teilschnitt durch Kollektorseitenwand und Boden des jeweiligen Gebäudes mit den zugeordneten Installationen.

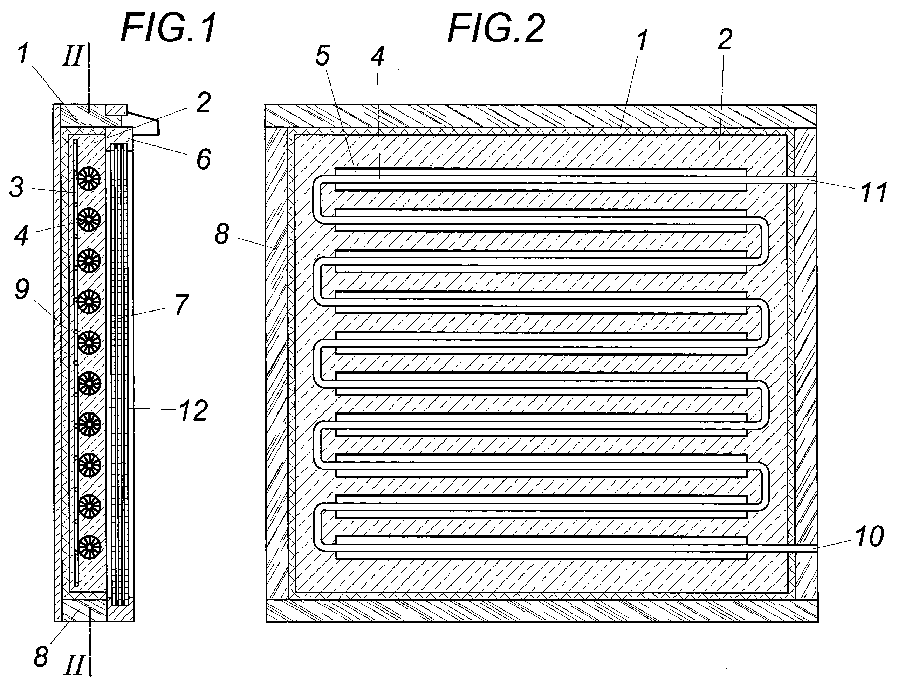

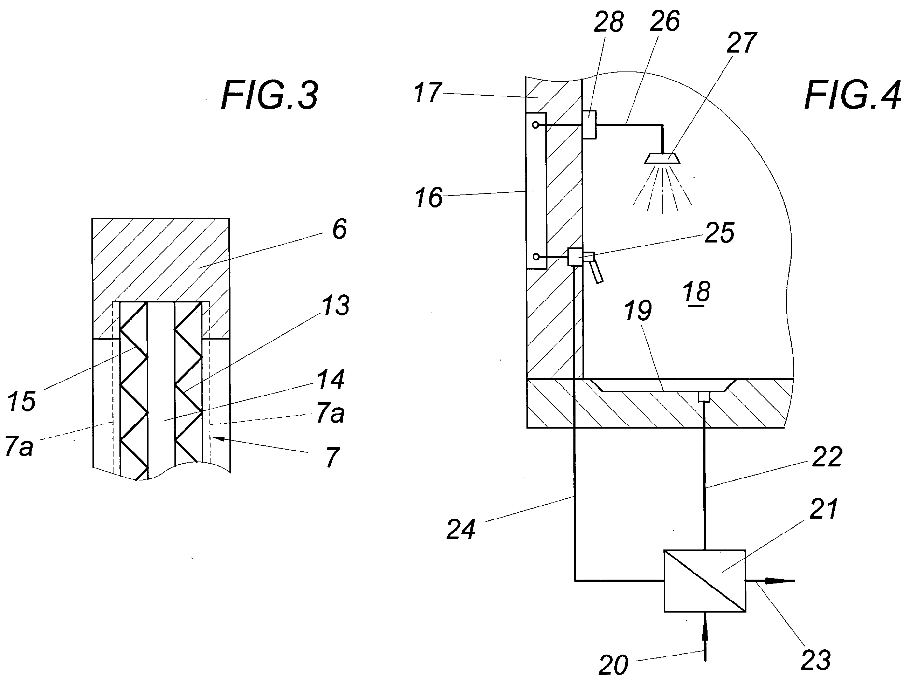

Nach den Fig. 1 und 2 ist in einem Einbaurahmen 1 ein aus Beton hergestellter, plattenförmiger Speicherkörper 2 angebracht, der in der Nähe der Rückseite mit einem Bewehrungsgitter 3 versehen ist, an dem ein im Mäander geführtes Leitungsrohr 4 für Luft oder Wasser angebracht ist. Dieses Leitungsrohr 4 trägt zur Verbesserung des Wärmeübergangs sternförmig angeordnete Rippen 5. Vorne schließt an den Einbaurahmen 1 ein Isolierschicht 7 aus transparentem Folienmaterial an, die gemäß Fig. 3 beim Ausführungsbeispiel aus drei aufeinandergelegten Folien 13, 14, 15 besteht, die eine zick-zack-Profilierung aufweisen und in den aufeinanderliegenden Folien 13, 14 bzw. 14, 15 mit kreuzenden Zackenprofielen verlegt sind, sodass sich zwischen ihnen nur punkt- bzw. linienförmige Berührungsstellen ergeben. Wie schon erwähnt wurde, sind die Folien 13, 14, 15 überhöht dargestellt und können in der Praxis nur eine Foliendicke von z. B. 0,5 mm und eine jeweilige Profilhöhe von 1 bis 2 mm aufweisen. Strichliert wurde in Fig. 3 angedeutet, dass das Folienpaket 13, 14, 15 zwischen dünnen Außengläsern 7a als Witterungsschutz eingebettet sein kann, wobei die Glasdicke und die Foliendicke nicht maßstabsgetreu dargestellt wurden. Der Einbaurahmen 1 ist von einem isolierenden Holzrahmen 8 umschlossen. Auch der Einbraurahmen 1 kann aus Isoliermaterial gefertigt werden. Bei einem Einbaurahmen 1 aus besser wärmeleitendem Material wird zwischen ihm und dem Holzrahmen 6 eine Isolierschicht angebracht. Schließlich ist an der Rückseite des Kollektors eine Isolierplatte 9 angebracht. Das Rohr 4 bildet unten einen Einlass 10 und oben einen Auslass 11. Die Anschlüsse 10 und 11 können zum Warmwasserbereiter- bzw. vorwärmer oder zu einem Radiator in einem hinter dem Kollektor befindlichen Raum geführt werden. Bei der Verwendung des Kollektors zur Lufterhitzung kann das Leitungsrohr 4 durch untereinander verbundene Längsschächte für die Luftführung ersetzt sein.

Bei der Ausführung nach Fig. 4 ist der in seiner Gesamtheit mit 16 bezeichnete Kollektor in die Vertiefung einer Außenwand 17 eines Gebäudes eingebaut. In den Boden des Raumes 18 der als Duschecke dient, ist eine Duschtasse 19 eingelassen. Eine Kaltwasserzuleitung 20 führt über einen Wärmetauscher 21, dem vom Auslass der Duschtasse 19 über eine Leitung 22 ablaufendes, aber noch warmes Duschwasser zugeführt wird. Für das eine Ablaufleitung 23 zu einem Kanal od. dgl. weitergeführt ist. Eine nun im Wärmetauscher 21 gegebenenfalls erwärmtes Brauchwasser führende Leitung 24, die unter dem Druck der Wasserleitung 20 steht, der gegebenenfalls durch einen vorgeschalteten Druckreduzierer auf einen brachbaren Wert verringert wurde, führt über ein Absperrorgan 25 zum Einlass 10 des Kollektors 16, wogegen der Auslasse 11 dieses Kollektors mit über eine weitere Leitung 26 mit einer Brause 27 verbunden ist. Im Bedarfsfall kann die Leitung 26 über eine wahlweise oder temperaturgesteuerte, z. B. elektrische Zusatzbeheizung 28 geführt werden, um bei ungünstigen Verhältnissen, insbesondere stärkerer Warmwasserentnahme als im Normalfall, die gewünschte Austrittstemperatur des Wassers zu gewährleisten. Selbstverständlich sind die Leitungen 22, 24 und 26 im Bedarfsfall mit einer Wärmeisolierung versehen. Das Absperrorgan 25 kann zusätzlich auch an eine Kaltwasserleitung, die mit der Leitung 20 in Verbindung steht, angeschlossen und als Mischbatterie ausgeführt sein. Weitere Möglichkeiten zur Einstellung der Warmwassertemperatur wurden in der allgemeinen Beschreibung angegeben.

## Patentansprüche

1. Anordnung zur Ausnützung der einstrahlenden Sonnenenergie an Gebäuden, insbesondere zwei oder mehrgeschossigen Wohnblöcken, mit einem Gebäude einem an dem Gebäude angebrachten Kollektor (16), mit durch ein für die Strahlung wenigstens teildurchlässigem Material (7) abgedeckten, isolierten Aufnahmeräumen für Wärmespeicher, der ein über Leitungen (26) in das Gebäude zu führendes Medium, insbesondere Wasser oder Luft aufheizt, und wenigstens einen weiteren Speicherkörper (2) zur Wärmeabgabe an das in das Gebäude zu führende Medium umfasst, **dadurch gekennzeichnet, dass** das für die Strahlung durchlässige Material (7) thermische U-Werte von unter 0,9 W/m² K, insbesondere von unter 0,7 W/m² K, aufweist und dass die Leitungen (26) für erwärmtes Wasser oder erwärmte Luft den Kollektor (16) unmittelbar mit wenigstens einem, in einem hinter dem Kollektor (16) und in dem Gebäude liegenden Verbraucherraum (18) angeordneten, Verbraucher verbunden sind, wobei der zugeordnete Kollektor (16) in seiner Wärmespeicherkapazität und Temperatur für den zu erwartenden Verbrauch an Wärmeenergie ausgelegt und im Falle der Warmwasserbereitung mit einer Verbrauchswasserleitung (24) verbunden ist, womit die Warmwasserentnahme unter dem Zuleitungsdruck der Verbrauchswasserleitung (24) erfolgt.

2. Anordnung nach Anspruch 1, **dadurch gekennzeichnet, dass** das für die Strahlung durchlässige Material (7) Schichten aus zwischen dünnen Außengläsern (7a) eingebetteten, übereinanderliegenden profilierten oder gefalteten beschichteten Folien (13, 14, 15) umfasst.

3. Anordnung nach Anspruch 1 oder 2, **dadurch gekennzeichnet, dass** ein für die Warmwasserzufuhr zu einem Bad bestimmter Kollektor (16) an die Außenwand (17) des jeweiligen Bades (18) anschließend angebracht ist.

4. Anordnung nach einem der Ansprüche 1 bis 3, **dadurch gekennzeichnet, dass** der Kollektor (16) mit einem Überhitzungsschutz ausgestattet ist.

5. Anordnung nach einem der Ansprüche 1 bis 4, **dadurch gekennzeichnet, dass** als Verbrühungsschutz an der Warmwasserentnahmestelle einer Dusche (27), eines Waschbeckens oder eines Bades im Kollektor (16) eine selbsttätig einschaltende Kaltwasserzufuhrleitung und bzw. oder eine Umwälzpumpe für das Speicherwasser vorgesehen ist.

6. Anordnung nach einem der Ansprüche 1 bis 5, **dadurch gekennzeichnet, dass** das Verbrauchswasser vor dem Kollektor (16) über einen, vorzugsweise am zugeordneten Warmwasserablauf (19) der Entnahmestelle (18) oder Entnahmestellen oder an einem Sammelbehälter für das ablaufende Wasser vorgesehenen Wärmetauscher (21) geführt ist.

7. Anordnung nach einem der Ansprüche 1 bis 6, **dadurch gekennzeichnet, dass** die wärmespeicherte Kapazität und Temperatur der verschiedenen Kollektoren (16) für Warmwasser, Luft oder direkte Raumerwärmung durch angepasste bzw. Anzahl der transparenten Folienschichten (13 bis 15) zusätzlich bestimmt ist.

8. Anordnung nach einem der Ansprüche 1 bis 7, **dadurch gekennzeichnet, dass** die übereinanderliegenden Folien (13, 14, 15) des für die Strahlung durchlässigen Materials eine aus parallelen Wellen oder Zickzackprofilen gebildete Profilierung aufweisen und aufeinanderfolgende Folien (13 - 14); 14 - 15) mit einander kreuzenden Wellen- oder Zackenprofilen verlegt sind, wobei die Strahlungsausnutzung und Temperaturregelung durch die Anzahl der Folien (13, 14, 15) bestimmbar ist.

9. Anordnung nach einem der Ansprüche 1 bis 6, **dadurch gekennzeichnet, dass** der oder die einer Wohnung zugeordneten Kollektoren um weitere Solaranlagen zur zusätzlichen Gewinnung elektrischer Energie ergänzt sind.

## Claims

1. Arrangement for utilising the solar energy irradiated on buildings, in particular two-storey or multi-storey housing blocks, comprising a building, a collector (16) mounted on the building, comprising insulated receiving spaces for a heat accumulator which are covered by a material (7) which is at least partially permeable to the radiation, said heat accumulator having a medium, in particular water or air, which is to be guided into the building via lines (26), and comprising at least one further accumulator body (2) for outputting heat to the medium to be guided into the building, **characterised in that** the material (7) which is permeable to the radiation has thermal U-values of less than 0.9 W/m² K, in particular of less than 0.7 W/m² K, and **in that** the lines (26) for heated water or heated air connect the collector (16) directly to at least one consumer which is arranged in a consumer space (18) located behind the collector (16) and in the building, wherein the allocated collector (16) is designed in terms of its heat accumulator capacity and temperature for the expected consumption of heat energy and, in the case of hot water generation, is connected to a consumption water line (24), whereby hot water is withdrawn under the supply line pressure of the consumption water line (24).

2. Arrangement as claimed in claim 1, **characterised in that** the material (7) which is permeable to the radiation comprises layers consisting of profiled or folded coated films (13, 14, 15) which are embedded between thin pieces of external glass (7a) and lie one on top of the other.

3. Arrangement as claimed in claim 1 or 2, **characterised in that** a collector (16) intended for supplying hot water to a bath is mounted adjoining the outer wall (17) of the respective bath (18).

4. Arrangement as claimed in any one of claims 1 to 3, **characterised in that** the collector (16) is equipped with an overheat controller.

5. Arrangement as claimed in any one of claims 1 to 4, **characterised in that** a cold water supply line, which switches on automatically, and/or a recirculating pump for the accumulated water is provided in the collector (16) as an anti-scalding device on the hot water withdrawal point of a shower (27), a washbasin or a bath.

6. Arrangement as claimed in any one of claims 1 to 5, **characterised in that** the consumption water is guided upstream of the collector (16) via a heat exchanger (21) which is provided preferably on the allocated hot water outlet (19) of the withdrawal point(s) (18) or on a collecting vessel for the running water.

7. Arrangement as claimed in any one of claims 1 to 6, **characterised in that** the heat accumulator capacity and temperature of the different collectors (16) is additionally intended for hot water, air or direct space heating by means of adapted ones of, or a number of, the transparent film layers (13 to 15).

8. Arrangement as claimed in any one of claims 1 to 7, **characterised in that** the films (13, 14, 15), which lie one on top of the other, of the material which is permeable to the radiation have profiling formed from parallel corrugations or zigzag profiles and subsequent films (13-14; 14-15) are laid with intersecting corrugated or jagged profiles, wherein the utilisation of radiation and the control of temperature can be determined by the number of films (13, 14, 15).

9. Arrangement as claimed in any one of claims 1 to 6, **characterised in that** the collector(s) allocated to a residence is/are supplemented by further solar heating systems for additionally producing electrical energy.

## Revendications

1. Installation pour l'utilisation de l'énergie solaire rayonnante sur des bâtiments, en particulier des immeubles à deux ou plusieurs étages, avec un bâtiment, un collecteur (16) placé au niveau du bâtiment, avec des espaces de réception isolés, recouverts par un matériau (7) au moins en partie perméable au rayonnement, pour accumulateur de chaleur, qui chauffe un fluide, en particulier de l'eau ou de l'air, à conduire au bâtiment par le biais de conduites (26), et comprend au moins un autre corps d'accumulateur (2) pour évacuation de la chaleur au niveau du fluide à conduire au bâtiment, **caractérisée en ce que** le matériau (7) perméable au rayonnement présente des valeurs U thermiques inférieures à 0,9 W/m2 K, en particulier inférieures à 0,7 W/m2 K, et **en ce que** les conduites (26) pour l'eau réchauffée ou l'air réchauffé, du collecteur (16) sont reliées directement avec au moins un consommateur disposé dans un local de consommateurs (18) placé dans le bâtiment et après le collecteur (16), le collecteur (16) associé étant conçu au niveau de sa capacité d'accumulateur de chaleur et sa température, pour la consommation à attendre au niveau de l'énergie thermique et étant relié dans le cas de la préparation d'eau chaude à une conduite d'eau de consommation (24), de sorte que le prélèvement de l'eau chaude s'effectue sous la pression d'alimentation de la conduite d'eau de consommation (24).

2. Installation selon la revendication 1, **caractérisée en ce que** le matériau (7) perméable au rayonnement comprend des couches constituées de films (13, 14, 15) recouverts pliés ou profilés superposés, noyés entre des verres extérieurs (7a) fins.

3. Installation selon la revendication 1 ou 2, **caractérisée en ce qu'**un collecteur (16) destiné pour l'amenée de l'eau chaude à un bain est ensuite posé au niveau de la paroi extérieure (17) de chaque bain (18).

4. Installation selon l'une des revendications 1 à 3, **caractérisée en ce que** le collecteur (16) est équipé d'une protection contre la surchauffe.

5. Installation selon l'une des revendications 1 à 4, **caractérisée en ce qu'**en tant que protection antibrûlure au niveau du point de prélèvement de l'eau chaude d'une douche (27), d'un lavabo ou d'un bain dans le collecteur (16), il est prévu une conduite d'amenée d'eau froide à enclenchement automatique et, ou plus précisément, une pompe de circulation pour l'eau de l'accumulateur.

6. Installation selon l'une des revendications 1 à 5, **caractérisée en ce que** l'eau de consommation est guidée avant le collecteur (16) par le biais d'un échangeur thermique (21) prévu de préférence au niveau de l'évacuation d'eau chaude (19) associée, du point de prélèvement (18) ou des points de prélèvement ou d'un récipient de collecte pour l'eau d'écoulement.

7. Installation selon l'une des revendications 1 à 6, **caractérisée en ce que** la capacité de l'accumulateur de chaleur et la température des différents collecteurs (16) sont définies, en plus, pour l'eau chaude, l'air et le réchauffement direct du local, par le nombre des couches de films transparentes ou adaptées (13 à 15).

8. Installation selon l'une des revendications 1 à 7, **caractérisée en ce que** les films (13, 14, 15) se superposant, du matériau perméable au rayonnement, présentent un profilage formé d'ondulations parallèles ou de profilés en zigzag et des films successifs (13-14) (14-15) sont posés avec des profilés triangles ou ondulés se croisant mutuellement, l'utilisation du rayonnement et la régulation de température pouvant être définies par le nombre de films (13, 14, 15).

9. Installation selon l'une des revendications 1 à 6, **caractérisée en ce que** le ou les collecteur(s) associé(s) à un logement est/sont complété(s) par d'autres installations solaires pour la récupération supplémentaire d'énergie électrique.
